**Europäisches Patentamt**

**European Patent Office**

**Office européen des brevets**

(19)

(11) Veröffentlichungsnummer: **0 184 718**
A2

(12)

# EUROPÄISCHE PATENTANMELDUNG

(21) Anmeldenummer: **85115048.2**

(22) Anmeldetag: **27.11.85**

(51) Int. Cl.⁴: **C 08 L 27/06,** C 08 L 33/10,
C 08 K 3/00, C 08 K 5/00
//
(C08L27/06, 23:08, 31:04, 23:18),
(C08L33/10, 23:08, 31:04, 23:18)

(30) Priorität: **12.12.84 DE 3445325**

(43) Veröffentlichungstag der Anmeldung: **18.06.86**
**Patentblatt 86/25**

(84) Benannte Vertragsstaaten: **BE DE FR GB IT NL SE**

(71) Anmelder: **Teroson GmbH, Hans-Bunte-Strasse 4,
D-6900 Heidelberg 1 (DE)**

(72) Erfinder: **Lipponer, Gerhard, Ziegelhäuser Strasse 54,
D-6901 Schönau (DE)**
Erfinder: **Neubauer, Rudolf, Guttenbergstrasse 4,
D-6901 Bammental (DE)**
Erfinder: **Höllriegel, Klaus, Schröderstrasse 4,
D-6900 Heidelberg 1 (DE)**

(74) Vertreter: **UEXKÜLL & STOLBERG Patentanwälte,
Beselerstrasse 4, D-2000 Hamburg 52 (DE)**

(54) **Haftklebrige Formteile und deren Verwendung.**

(57) Haftklebrige Formteile, insbesondere Dichtstoffprofile, aus Plastisolen auf Basis von PVC und/oder polymeren Methacrylsäureestern, welche außerdem Ethylen-Vinylacetat-Copolymere mit unterschiedlichem Vinylacetatgehalt, Füllstoffe und Pigmente, Weichmacher, Haftharze und Polyisobutylen enthalten. Durch genaue mengenmäßige Abstimmung der einzelnen Bestandteile werden haftklebrige Formteile erhalten, die den Anforderungen im Fahrzeug- und Karosseriebau gerecht werden, d.h. ausreichende Kalthaftung beispielsweise auf EC-grundiertem Blech, gute Haftung bei den erhöhten Temperaturen des Aushärtungsvorganges und eine ausreichende chemische Stabilität bei derartig hohen Temperaturen aufweisen. Die erfindungsgemäßen Formteile können durch Kaltverarbeitung hergestellt werden.

EP 0 184 718 A2

Die Erfindung betrifft haftklebrige Formteile, insbesondere Dichtstoffprofile, aus Plastisolen auf Basis von PVC und/oder polymeren Methacrylsäureestern, welche Ethylen-Vinylacetat-Copolymere und übliche Zusätze enthalten sowie eine spezielle Zusammensetzung aufweisen, die sie zur Verwendung im Fahrzeug- und Karosseriebau geeignet machen.

Plastisole auf Basis von PVC und/oder polymeren Methacrylsäureestern, insbesondere Polymethylmethacrylat, sind seit vielen Jahren bekannt und werden auf den verschiedensten technischen Gebieten eingesetzt. Dabei ist es bekannt, die Eigenschaften dieser Plastisole durch verschiedene Zusätze zu verändern bzw. im Hinblick auf die gewünschte Anwendung zu verbessern. So ist es u.a. aus der DE-OS 23 27 716, der DE-OS 29 27 088 und der US-PS 3 517 083 bekannt, derartigen Plastisolen Ethylen-Vinylacetat-Copolymere (EVA) zuzusetzen. Im Hinblick auf haftklebrige Formteile wie Profile bzw. Platten, die sich zur Verwendung im Fahrzeugbau eignen, ist darüber hinaus in der DE-OS 32 29 656 vorgeschlagen worden, derartige Plastisole durch Erwärmen auf 80 bis 130°C vorzugelieren. Die Formteile können nach diesem Verfahren direkt durch Warmextrudieren oder nach dem Erwärmen der Plastisolmischung durch geeignetes Zerschneiden oder Stanzen hergestellt werden. Hinsichtlich der bekannten haftklebrigen Eigenschaften von EVAs enthaltenden Materialien sei beispielsweise auf die Beschreibungseinleitung der DE-OS 25 40 378 verwiesen.

Die Vorteile der an sich bekannten vorgelierten Plastisolbänder bzw. -profile liegen auf der Hand, insbesondere wenn diese vorgeformten Formteile eine ausreichende Haftung auf den zu verbindenden oder abzudichtenden Werkstoffen aufweisen. Nachteilig an Formteilen aus vorgelierten Plastisolen wie den in der DE-OS 32 29 656 beschriebenen, ist
jedoch die Tatsache, daß eine aufwendige Vorgelierungsstufe durchgeführt werden muß, wobei eine genaue Steuerung
der Verfahrensbedingungen erforderlich ist, um den gewünschten
Vorgelierungsgrad zu erzielen, d.h. die Vorgelierung muß
ausreichend sein, um die gewünschte Formbeständigkeit und
Kalthaftung zu erhalten, darf aber andererseits nicht zu
einer vorzeitigen Aushärtung führen. Es wird angenommen,
daß haftklebrige Formteile aus vorgelierten Plastisolen
wie sie in der DE-OS 32 29 656 beschrieben werden, aufgrund
dieser Schwierigkeiten in der Praxis bisher keine Anwendung
gefunden haben.

Angesichts des geschilderten Entwicklungsstandes lag der
Erfindung die Aufgabe zugrunde, einen bei Raumtemperatur
selbstklebenden Plastisoldichtstoff auf Basis PVC und/oder
polymeren Methacrylsäureestern sowie EVA in Form von haftklebrigen Formteilen aufzufinden, der ohne Vorgelierung
- durch seine Formgebung in seiner Menge genau dosiert -
auf die zu dichtende oder zu verbindende Unterlage, auf
der er selbstklebend haften bleibt, kalt aufgetragen und
dann bei erhöhter Temperatur gelieren und damit aushärten
gelassen werden kann. Mit anderen Worten lag der Erfindung
die Aufgabe zugrunde, auf Plastisolen basierende, vorgeformte
Dichtstoffe mit ausreichender Kalthaftung und Formstabilität
herzustellen, ohne daß eine bisher für erforderlich gehaltene
Vorgelierung erfolgt.

Zur Lösung dieser Aufgabe werden erfindungsgemäß haftklebrige
Formteile, insbesondere Dichtstoffprofile, der eingangs
genannten Art mit der speziellen Zusammensetzung gemäß
den Patentansprüchen vorgeschlagen. Gegenstand der Erfindung
ist ferner die Verwendung dieser haftklebrigen Formteile
zum Verbinden, Abdichten und Versteifen von Karosserieteilen bei Fahrzeugen.

Der große Vorteil der erfindungsgemäßen Formteile liegt darin, daß sie durch Kaltverarbeitung hergestellt werden können. Zu diesem Zweck werden die verschiedenen Bestandteile in einer geeigneten Mischvorrichtung zu einer homogenen Masse vermischt. Geeigneterweise geschieht dies in einem Kneter mit Austragschnecke, so daß die homogen durchmischte Masse sofort anschließend zum gewünschten Formteil, meist einem Dichtstoffprofil (Band- oder Rundprofil oder auch anders geformte Profile, wie dreieckige oder gewinkelte Profile) extrudiert werden kann. Selbstverständlich können auch andere dem Fachmann geläufige Misch- und Austragvorrichtungen verwendet werden. Zur besseren Extrudierbarkeit ist es dabei von Vorteil, wenn die Masse beim Durchmischen und Extrudieren etwas erwärmt wird. Allerdings sollte die Temperatur nicht über 70$^{o}$C ansteigen und in der Regel nicht mehr als 60 bis 65$^{o}$C betragen. Eine Vorgelierung in nennenswertem Umfang erfolgt bei diesen Temperaturen noch nicht.

Es hat sich überraschend gezeigt, daß nur dann haftklebrige Formteile erhalten werden, die den Anforderungen im Fahrzeug- und Karosseriebau gerecht werden, d.h. ausreichende Kalthaftung beispielsweise auf EC-grundiertem Blech, gute Haftung bei den erhöhten Temperaturen des Aushärtungsvorganges und eine ausreichende chemische Stabilität bei derartig hohen Temperaturen aufweisen, wenn die erfindungsgemäßen Komponenten in den angegebenen Mengenverhältnissen eingesetzt werden.

Bei den Ethylen-Vinylacetat-Copolymeren handelt es sich um übliche, im Handel erhältliche Materialien, mit dem angegebenen Vinylacetatgehalt. Ihr Schmelzindex nach ASTM D 1238 liegt bei EVA mit 40 Gew.% VA im Bereich von 35 bis 75 g/10 min (190$^{o}$C/2,16 kg) und bei EVA mit 26 bis 29 Gew.% VA im Bereich von 2,5 bis 5 g/10 min (190°C/2,16 kg).

Als Füllstoffe und Pigmente eignen sich die auf diesem technischen Gebiet dem Fachmann geläufigen Substanzen wie Bariumsulfat, Calciumcarbonat, gemahlener Dolomit sowie Eisenoxid oder Titandioxid, wobei Bariumsulfat als Füllstoff und Eisenoxid (schwarz) als Pigment bevorzugt sind.

Als Plastisolgrundlage können alle üblichen verpastbaren Polyvinylchloridsorten verwendet werden. Sie sollten möglichst einen K-Wert von etwa 60 bis 90 aufweisen und eine Korngröße unterhalb von 150 µm haben. Neben PVC sind bekanntlich auch andere verpastbare pulverförmige Mischpolymerisate des Vinylchlorids verwendbar, die aber zum überwiegenden Teil aus Vinylchlorid bestehen und bei denen die Gelierungseigenschaften in der Hitze dem des reinen homopolymeren Vinylchlorids praktisch entsprechen.

Als polymere Methacrylsäureester kommen insbesondere Methyl-, Propyl- und Butylester in Frage, die in bekannter Weise durch Emulsions- und Dispersionspolymerisation hergestellt werden können. Das Molekulargewicht der polymeren Methacrylsäureester liegt in der Regel zwischen etwa 200 000 und 1 500 000. Bevorzugt sind dabei Copolymere aus verschiedenen Methacrylsäureestern. Besonders bevorzugt sind Terpolymere aus Methylmethacrylat, Butylmethacrylat und geringen Mengen Vinylimidazol, wobei der Anteil an Methylmethacrylat mehr als 50 % beträgt und Vinylimidazol in einer Menge von 1 bis 5 % vorhanden ist.

Als Weichmacher können die für PVC bzw. Polymerisate des Methacrylsäuremethylesters bekannten Weichmacher verwendet werden. Dabei hat es sich als besonders vorteilhaft herausgestellt, wenn man Trioctylphosphat und Nitrilkautschuk in den angegebenen Mengen nebeneinander einsetzt.
Ein geeigneter Nitrilkautschuk ist z.B. ein Acrylnitril-
Butadien-Copolymer in flüssiger Form mit einem mittelhohen
Acrylnitrilgehalt. Derartige Produkte werden von verschiedenen
Herstellern angeboten.

Neben Polyamidoaminen und Epoxidharzen haben sich als Haftharze insbesonders Harzester als günstig für die Verbesserung
der Hafteigenschaften nach der Ausgelierung bzw. Aushärtung
erwiesen. Bei den Harzestern handelt es sich um Ester von
hydriertem Kolophonium. Sowohl die Polyamidoamine bzw.
die Epoxidharze als auch die erfindungsgemäß bevorzugten
Harzester sind handelsübliche Produkte und werden von den
verschiedenen Herstellern angeboten.

Auch das erfindungsgemäß zu verwendende Polyisobutylen
ist ein übliches Handelsprodukt, d.h. es handelt sich vorzugsweise um Polyisobutylen mit relativen Molekülmassen
im mittleren Bereich von 30 000 bis 50 000 (Viskositätsmittel).

Die Vorteile der erfindungsgemäßen haftklebrigen Formteile
bestehen u.a. darin, daß man eine genau dosierte Materialmenge durch entsprechende Profilgestaltung aufbringen kann,
daß ein weites Spektrum der Formgebung zur Verfügung steht,
daß die Dichtstoffauflage vor der Wärmebehandlung korrigiert werden kann, daß eine Anpassung des Dichtstoffes
an die Form der Unterlagen während der Wärmebehandlung
zwecks Aushärtung erfolgt und daß durch Ausgelieren eine
feste und festhaftende Dichtung beispielsweise auf EC-grundiertem Blech erhalten wird. Darüber hinaus kann die Härte
des ausgelierten Materials sowie die Klebrigkeit vor dem
Einbrennen durch Veränderungen in der Formulierung eingestellt werden.

Dem Fachmann ist klar, daß die erfindungsgemäß verwendete Zusammensetzung neben der oben als bevorzugt erwähnten Kaltextrusion auch auf andere herkömmliche Weise zu haftklebrigen Formteilen beispielsweise durch Pressen oder Stanzen verarbeitet werden kann. Außerdem können erfindungsgemäße haftklebrige Formteile beispielsweise in Form von Platten mit einer Oberflächenkaschierung versehen werden. Weiterhin können die erfindungsgemäßen Profile Einlagen aus Metall oder Kunststoff als Seele zwecks Längsstabilisierung (kein Auslängen beim Abwickeln längerer Dichtstoffprofile) bzw. als Distanzhalter für eine definierte Dicke enthalten. Dabei kann es sich bei der Einlage aus Metall um einen elektrisch leitfähigen Draht oder ein elektrisch leitfähiges Band handeln, die zur elektrischen Beheizung zwecks Ausgelieren verwendet werden können.

Außerdem wurde gefunden, daß die Hafteigenschaften von vorgeformten Dichtstoffen auf den im Fahrzeugbau eingesetzten Blechen außerordentlich verbessert werden können, wenn man den Ausgangszusammensetzungen ein magnetisierbares Material zusetzt und dann den vorgeformten Dichtstoff vor seiner Verwendung magnetisiert. Dadurch wird zusätzlich zu den selbstklebenden Eigenschaften erreicht, daß der vorgeformte Dichtstoff satt auf dem Blech aufliegt und sich beim Einbrennen fest mit der Unterlage verbindet. Durch die Magnetisierung des vorgeformten Dichtstoffes und die damit verbesserte Auflage auf dem Karosserieblech wird das üblicherweise beobachtete Ablösen der Ränder der meist bandförmigen Dichtstoffprofile vermieden. Durch die Magnetisierung wird erreicht, daß dieses Abheben der Ränder unterbleibt und eine satte Auflage auf dem Eisenblech erreicht wird, was vorteilhafterweise zu einer vollflächigen Haftung nach dem Einbrennen führt. Als magnetisierbare Substanzen eignen sich Verbindungen der Formel $MeO.Fe_2O_3$,

wobei BaO.Fe$_2$O$_3$ (Bariumferrit) bevorzugt ist. Die magnetisierbare Substanz ersetzt einen Teil oder den gesamten
Füllstoff. So kann in der erfindungsgemäßen Zusammensetzung
beispielsweise das gesamte Bariumsulfat durch Bariumferrit
ersetzt werden. Die Magnetisierung des vorgeformten Dichtstoffes erfolgt nach üblichen Verfahren.

Das Ausgelieren der erfindungsgemäßen haftklebrigen Formteile bzw. das Einbrennen auf dem Karosserieblech bietet
keine Besonderheiten und erfolgt üblicherweise bei Temperaturen von 150 bis 200$^{o}$C über einen Zeitraum von 3 bis 15
Minuten, wobei Einbrenndauern von etwas über 5 Minuten
bei 160 bis 190$^{o}$C am üblichsten sind. Selbstverständlich
erfüllen die erfindungsgemäßen haftklebrigen Formteile
nach dem Ausgelieren und Einbrennen die im Automobilbau
üblichen Anforderungen der Überlackierfähigkeit mit gängigen
Automobilgrundierungen und Lacken. Besonders vorteilhaft
ist auch die große chemische Stabilität der erfindungsgemäßen haftklebrigen Formteile, die beim Einbrennen zwischen
160 und 190$^{o}$C praktisch völlig blasenfrei bleiben.

Beispiel
Folgende Materialien wurden in einem Kneter mit Austragschnecke vermischt, wobei der Kneter vor Arbeitsbeginn
auf 70$^{o}$C aufgeheizt wurde:

| | |
|---|---:|
| EVA (mit 40 Gew.% Vinylacetat) | 15,70 Gew.% |
| EVA (mit 26 - 29 Gew.% Vinylacetat) | 2,70 Gew.% |
| Harzester | 14,00 Gew.% |
| Polyisobutylen | 2,80 Gew.% |
| Bariumsulfat | 33,78 Gew.% |
| Eisenoxid (schwarz) | 0,32 Gew.% |
| polymere Methacrylsäureester | 21,00 Gew.% |
| Trioctylphosphat | 5,40 Gew.% |
| Nitrilkautschuk | 4,30 Gew.% |
| | 100,00 |

Zuerst wurden die beiden EVA-Komponenten in den Kneter
gegeben und gründlich durchmischt. Nach etwa 20 Minuten
wurden bei laufender Maschine Bariumsulfat und Eisenoxid
über einen Zeitraum von etwa 20 Minuten zugesetzt. Nach
weiteren 10 bis 15 Minuten Kneten war das Material homogen.
Bei laufender Maschine wurde dann der Harzester über einen
Zeitraum von 15 Minuten zugesetzt. Anschließend wurde das
Polyisobutylen eingearbeitet. Danach wurde der Nitrilkautschuk über einen Zeitraum von 15 Minuten zugesetzt und
eingearbeitet. Als letztes wurde das Trioctylphosphat bei
laufender Maschine langsam zugegeben und innerhalb 10 Minuten
zusammen mit dem Methacrylsäureester eingearbeitet. Es
wurde dann noch weitere 10 Minuten lang geknetet. Zwischen
den einzelnen Zusätzen wurden die Trogwände mehrfach abgespachtelt.

Ein Teil der so zu einer homogenen Masse verarbeiteten
Mischung wurde bei 60 bis 70°C zu Bandprofilen extrudiert.
Ein anderer Teil wurde zu Platten bzw. Folien verpreßt.
Versuche mit diesen Produkten unter üblichen Bedingungen
in der Autoindustrie verliefen außerordentlich erfolgreich
und wurden sehr gut beurteilt.

Patentansprüche

1. Haftklebrige Formteile, insbesondere Dichtstoffprofile, aus Plastisolen auf Basis von PVC und/oder polymeren Methacrylsäureestern, welche Ethylen-Vinylacetat-Copolymere und übliche Zusätze enthalten, dadurch gekennzeichnet, daß sie folgende Zusammensetzung aufweisen:

| | |
|---|---|
| EVA (mit 40 Gew.% Vinylacetat) | 10 - 20 Gew.% |
| EVA (mit 26 - 29 Gew.% Vinylacetat) | 0,5 - 6 Gew.% |
| Füllstoffe + Pigmente | 20 - 40 Gew.% |
| PVC und/oder polymere Methacrylsäureester | 15 - 30 Gew.% |
| Weichmacher | 3 - 15 Gew.% |
| Haftharze | 2 - 17 Gew.% |
| Polyisobutylen | 3 - 15 Gew.%. |

2. Haftklebrige Formteile nach Anspruch 1, dadurch gekennzeichnet, daß sie folgende Zusammensetzung aufweisen:

| | |
|---|---|
| EVA (mit 40 Gew.% Vinylacetat) | 12 - 16 Gew.% |
| EVA (mit 26 - 29 Gew.% Vinylacetat) | 1 - 4 Gew.% |
| Füllstoffe + Pigmente | 25 - 36,5 Gew.% |
| PVC und/oder polymere Methacrylsäureester | 20 - 25 Gew.% |
| Weichmacher | 5 - 12 Gew.% |
| Haftharze | 11 - 14 Gew.% |
| Polyisobutylen | 5 - 10 Gew.%. |

3. Haftklebrige Formteile nach Anspruch 1 oder 2, dadurch gekennzeichnet, daß sie als Weichmacher 3 bis 6 Gew.% Trioctylphosphat und 2 bis 6 Gew.% Nitrilkautschuk, als Füllstoffe und Pigmente 25 - 35 Gew.% Bariumsulfat und 0,1 bis 1,5 Gew.% Eisenoxid (schwarz) und als Haftharze 11 bis 14 Gew.% Harzester enthalten.

4. Haftklebrige Formteile nach einem der Ansprüche 1 bis 3, dadurch gekennzeichnet, daß sie als polymere Methacrylsäureester ein Terpolymer aus Methylmethacrylat, Butylmethacrylat und Vinylimidazol enthalten, in dem der Anteil an Methylmethacrylat mehr als 50 % beträgt und Vinylimidazol in einer Menge von 1 bis 5 % vorhanden ist.

5. Verwendung der haftklebrigen Formteile, insbesondere Dichstoffprofile, nach einem der Ansprüche 1 bis 4 zum Verbinden, Abdichten und Versteifen von Karosserieteilen bei Fahrzeugen.